# EUROPEAN PATENT APPLICATION

(11) **EP 2 100 501 A1**
(43) Date of publication of application: **16.09.2009**
(21) Application number: 09380048.0
(22) Date of filing: 10.03.2009
(51) Int. Cl.: A01G 25/02

(54) **Anti-suction device applicable to integrated drippers**

(30) Priority: 10.03.2008 ES 200800497 U
(71) Applicant: Mondragon Soluciones, S.L.U., 46550 Albuixech (Valencia) (ES)
(72) Inventor: Vergara Rubio, Antonio, 46550 Albuixech (Valencia) (ES)
(74) Representative: Carpintero Lopez, Francisco

(57) **Abstract**

The present invention relates to an anti-suction device for drip irrigation emitters or drippers. The dripper comprises a planar or cylindrical body (1) having an inlet of fluid with a prefilter (3) connecting with a labyrinth (4) leading the fluid to an outlet chamber (5). The device is characterized in that it has a non-return sealing element (2) which can carry out an upward-downward movement depending on the existing pressure or on the fluid direction, said sealing element being arranged in correspondence with at least one of the ends of the labyrinth (4). The device object of the invention is intended to prevent the possible introduction of unwanted particles into the dripper due to a pressure variation inside the pipe.

## Description

### Object of the Invention

The present invention relates to an anti-suction device applicable to integrated drippers.

The invention is particularly applied to drippers, improving them, of the type referred to as integrated drippers, which are arranged inside the water feeding conduit or pipe to carry out the drip irrigation, formed by a one-piece body, having an access of water to their inside, a pressure drop labyrinth and an outlet chamber, having the particularity of incorporating an innovative anti-suction device intended to prevent the possible introduction of unwanted particles into the dripper when, due to a pressure variation inside the pipes, the fluid circulation direction is reversed therein.

### Background of the Invention

As is known, different types of drip irrigation emitters or drippers are known, among which the following documents must be emphasized:
- ES1039506, relating to an integrated dripper formed by a prismatic, elongated and flattened one-piece body, with a T-shaped section, having its upper surface curved in order to allow its adhesion to the inner face of the pipe by means of weldability. Said dripper, in one of its sides, has a grated window for the access of water to the inside of the dripper, emerging in a crooked labyrinth based on straight sections, forming acute and successively opposing angles with one another, covering the rest of the body of the dripper until the opposite side, in which an outlet chamber is arranged. Said labyrinth and chamber are open at the upper part to adapt and fix them to the inner wall of the pipe, the latter having an outlet orifice in correspondence with the chamber in order to allow the drip irrigation. Inside the dripper, the flow flows through the window, passing through the inside of the labyrinth until the chamber, a pressure drip occurring, as is conventional, to achieve the drip irrigation effect.
- ES1019240, relating to an improved dripper, very similar to the one described above but in this case incorporating a central grated window, respective labyrinths finished in corresponding chambers emerging towards both ends of the body in order to achieve the drip irrigation at two different points of the dripper.

In both cases, the drawback of the mentioned drippers is that, since they are integrated inside the pipe and the latter is generally buried, when there is a pressure drop therein, or it is drained, the liquid circulation direction is reversed, a depression being created therein and therefore a suction which, in most cases, causes it to be obstructed and blocked due to the entrance of particles from the surrounding earth.

Other drippers or emitters referred to as "self-compensating" drippers or emitters, such as those described in the following documents, are also known:
- ES2223241, relating to a self-compensating drip irrigation emitter with a unidirectional flow device, formed by several elements, such as the actual dripper, incorporating its own self-compensating membrane, a support cover for the aforementioned membrane, acting as a filter, and an additional circular sealing membrane resting on a watertight seat fillet or on a second stop formed by several retaining tabs according to whether the pressure inside the pipe is less than or greater than the outer pressure. However, in this case the described dripper is a self-compensating and cylindrical dripper which, therefore, and unlike those to which the new anti-suction device would be applied, is not suitable for its use in belt-type pipes with reduced thicknesses which can be wound in reels with small dimensions, being configured as an element with a complex and elaborate structural configuration.
- ES2258360, relating to a cylindrical dripper, formed as a body with considerable dimensions, having a basin with a filter and a zigzag labyrinth with a beveling, further incorporating a cover in the lower face of which a basin and labyrinth equivalent to the previous ones are formed. Between both parts, the body and the cover, there is fixed a sealing membrane in collaboration with the beveling and, therefore, located between the two labyrinths, without covering the entire inside, allowing the passage of water between both.
- Finally, ES1065439, relating to an emitter for drip irrigation, which is likewise self-compensating, and also comprises to that end several components such as the actual body of the dripper, with a membrane located between said body and a complementary cover, a self-compensation chamber being located above said membrane and already inside the cover.

Said dripper types have several drawbacks, on one hand, the two mentioned in the first place, as has already been mentioned, have the drawback of not having elements preventing the penetration of particles of earth therein, and on the other hand, those described next of self-compensating type, although they generally acceptably achieve said objective, have drawbacks derived mainly from the complexity of their structural configuration, having additional covers and self-compensation membranes, which can negatively affect both their manufacturing cost and the higher probability of deterioration of their parts, as well as drawbacks derived from their circular configuration and dimensions preventing their application to all pipe types.

On the other hand, the introduction of any dripper in a pipe causes a significant pressure drip, said drop being considerably higher in cylindrical drippers.

Taking into consideration the aforementioned drawbacks associated to the conventional systems existing in the current state of the art intended for the same purpose, the main objective of the present invention is achieving an anti-suction device applicable to integrated drippers with both a planar and a cylindrical configuration which, without losing the advantageous aspects of the systems described in the mentioned background documents, prevents the complexity and volume drawbacks of some of them and considerably improves aspects related to simplicity of the others, i.e., which incorporates improvements to provide it with an anti-suction system without being self-compensating.

### Description of the Invention

Thus, the anti-suction device applicable to integrated drippers proposed by the present invention satisfactorily reaches the aforementioned objectives, the characterizing details making it possible being suitably included in the final claims attached to the present description, specifically preventing the entrance of particles therein when there is a pressure variation situation.

To that end, and more specifically, the integrated dripper in which the application of the anti-suction device is proposed is configured from a one-piece body with a planar or cylindrical configuration preferably made of thermoplastic material, contemplating the possibility of its upper surface being curved, thus allowing its adaptation to different pipe diameters, conventionally having an inlet of water to its inside which connects with a pressure drop labyrinth and leads it towards an outlet chamber arranged in coincidence with an orifice made for such purpose in the pipe.

Said anti-suction device has the particularity of incorporating a non-return sealing element which, as a result of its arrangement, has a slight upward-downward movement, being located at one end of the body of the dripper, and more specifically, in its upper open face and exclusively in correspondence with at least one of the ends of the labyrinth as will be set forth below, without physically sealing the actual body forming the labyrinth.

In these conditions, the sealing element can be arranged either in correspondence with an end of the labyrinth at which the prefilter forming the inlet of water is located, or in correspondence with the opposite end of the labyrinth at which the outlet chamber allowing the drip irrigation is located.

It must be indicated that the mentioned prefilter consists of several orifices or boreholes with reduced dimensions made in the end of the body at the inlet of the fluid.

The described sealing element is in turn housed in a cavity of the body between respective retaining elements which can be formed in different ways, either two partitions having a certain inclination in opposite directions, two opposite or facing perpendicular walls incorporating respective flanges or two opposite flanges arranged in the walls forming the upper cavities of the prefilter, such that they allow both its seating and its upward and downward movement caused by pressure variations which may occur inside the pipe, reversing the fluid circulation direction, while at the same time preventing its disassembly in the event of being formed as a single element with a one-piece character.

In normal use conditions, the fluid will pass through the prefilter and when the sealing element is arranged in correspondence with the inlet end of the labyrinth and outside the latter, it is pushed slightly upwards, until being retained by the inclined inner walls of the partitions or by the flanges independently of where they are positioned, either in the partitions or in the walls of the upper cavity of the prefilter, preventing its exit. When the sealing element rises slightly, the liquid will flow through the small side spaces provided between such element and respective adjacent walls to the partitions or, in the absence of the partitions, between such element and the walls of the upper cavity to the prefilter, to pass through the labyrinth, finally reaching the outlet chamber which is located in correspondence, as has been stated, with the orifice made in the pipe to carry out the drip irrigation.

When a pressure variation occurs, caused by a possible suction, the membrane will tend to be positioned in its lower level in correspondence with the prefilter, closing the transmission and preventing the introduction of unwanted outer particles into the body of the dripper.

It is possible for the sealing element and the retaining elements to be located in a receptacle and for the latter to incorporate means for its lowering on the cavity of the prefilter, being housed therein, in which case the operation would be identical to that mentioned above.

When the sealing element is arranged at the opposite end of the labyrinth, i.e., in correspondence with the outlet chamber, it will preferably be formed by means of the mentioned receptacle. To that end, the depth of the outlet chamber must be greater than the current one in order for the latter to be housed therein. Said receptacle will have in its base an orifice made for direct communication with the bottom of the outlet chamber, there being a conduit for communication between the wall of the receptacle and the wall of the chamber allowing the liquid to flow therethrough and establish the communication with the labyrinth. Thus, when the liquid flows through the prefilter, which in this case will not incorporate the sealing element, it will flow through the labyrinth reaching the outlet chamber and upon being in direct communication with the inside of the receptacle, it will operate in a manner similar to when the sealing element was arranged in the prefilter, i.e., the sealing element which will be retained at the upper part by the retaining elements moving upwards and the liquid flowing through the side spaces existing between the partitions and the walls of the receptacle or the walls of the receptacle if they are formed as flanges instead of partitions, thus, when there is a pressure variation inside the pipes and the fluid circulation direction is reversed, the anti-suction sealing element will tend to be positioned in its lower level in correspondence with the lower face of the receptacle, closing the orifice made in its base and closing the communication with the chamber and therefore with the rest of the body of the dripper.

Although the sealing element is preferably formed as a silicone membrane or the like, other possibilities of sealing elements with an elastic nature are not discarded, in which case the body of the dripper should have a rigid nature.

The invention contemplates the reverse possibility, i.e., that the body of the dripper has an elastic nature and the sealing element is rigid in this case.

Any of the previous possibilities would allow the upward-downward movement of the sealing element inside the body of the dripper.

In the same way, different configurations are contemplated for the sealing element, both with reduced thickness, such as laminar, or with greater thicknesses, such as spherical.

Therefore, as a result of the described configuration and particularities of the new anti-suction device proposed, it prevents the penetration of particles inside the body of the planar or cylindrical integrated dripper, being able to be installed in any type of pipe, both in conventional pipes referred to as thick-walled pipes and even in the pipes referred to as belt-type pipes with reduced thicknesses.

Consequently, the effectiveness and simplicity of the operation of the proposed element are verified, being able to state at the same time that it is configured as an innovative structure with structural and constitutive features that were unknown up until now for the purpose for which it is intended, which reasons, added to its practical usefulness, provide it with enough grounds to obtain the exclusive rights sought.

### Description of the Drawings

To complement the description which is being made and with the aim of aiding to better understand the features of the invention, a set of drawings is attached to this specification as an integral part thereof, in which the following has been depicted with an illustrative and non-limiting character:

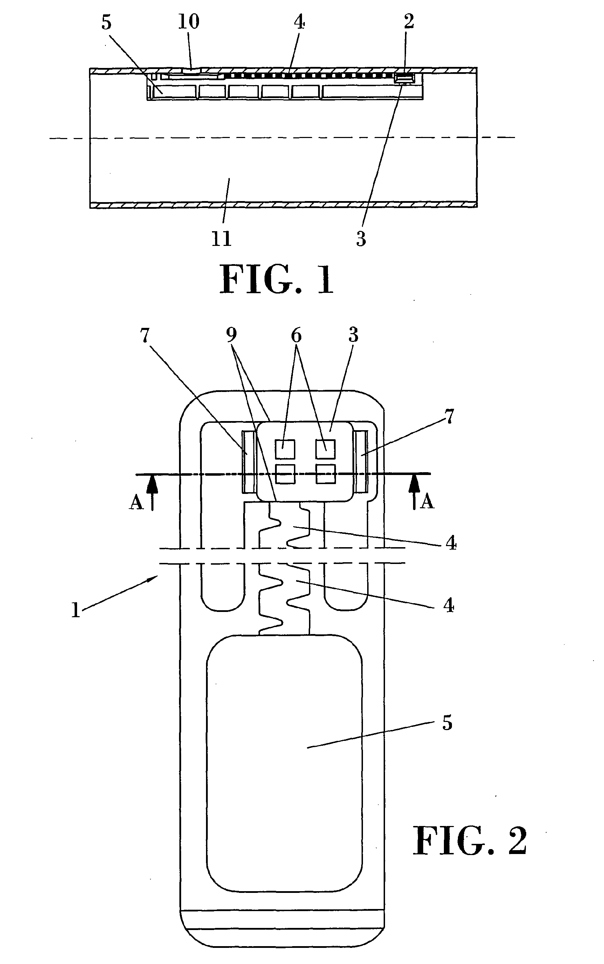

Figure 1 shows a schematic longitudinal section view of a pipe to which a dripper with a planar configuration incorporating the sealing element object of the invention in correspondence with the prefilter has been integrated, its general configuration and the way in which it is installed for its operation being seen therein.
Figure 2 shows a plan view of an integrated dripper incorporating the anti-suction device object of the invention, in which the main parts and elements that it comprises, as well as the configuration and arrangement thereof, are seen, having been depicted without the incorporation of the sealing element in order to observe the configuration of the prefilter and of the boreholes that the latter has.
Figures 3 and 4 show respective cross-section views of the body of a dripper according to section line A-A indicated in Figure 2, the way of incorporating the sealing element thereto by means of the raising of the partitions holding it being seen in them.

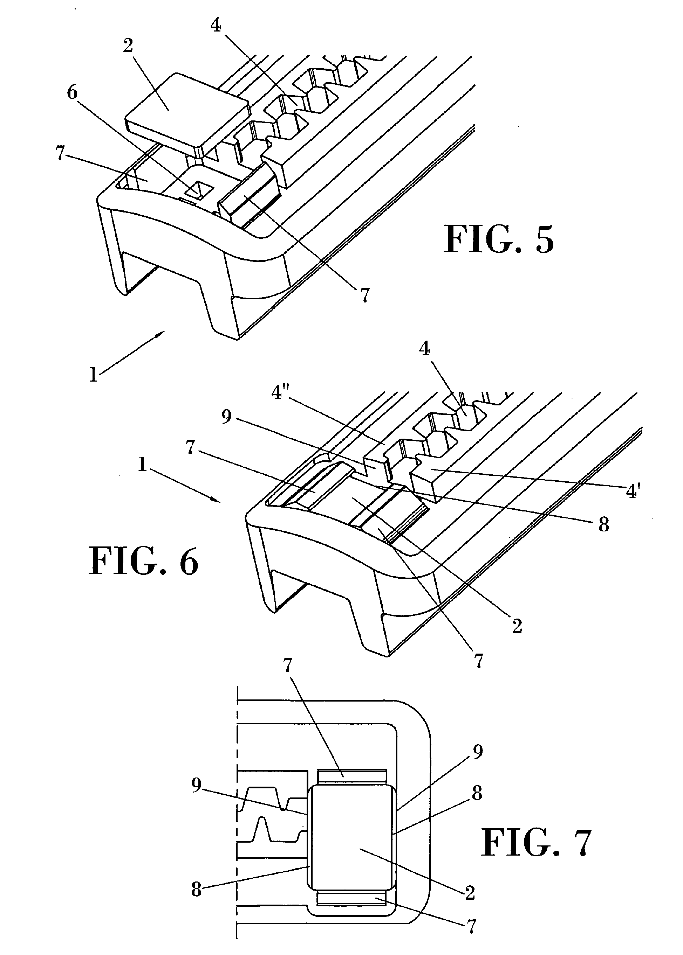

Figures 5 and 6 show respective perspective views of the portion of the body of a dripper in which the sealing element is incorporated, the raising of the partitions to allow the introduction of the sealing element being seen in Figure 5, and the closing thereof on it to prevent its extraction being seen in Figure 6.
Figure 7 shows a plan view of the part of the prefilter of a dripper in which the sealing element is incorporated, the side spaces in relation thereto through which water flows in normal use conditions being seen.
Figure 8 shows a longitudinal section view of a pipe to which a dripper with a planar configuration incorporating the sealing element object of the invention in correspondence with the outlet chamber and housed in a lowerable receptacle has been integrated.
Figure 9 shows a partial perspective view of the device in which the option of incorporating the sealing element in the prefilter having perpendicular partitions with retaining flanges is shown.

### Preferred Embodiment of the Invention

In view of the mentioned figures, and according to the numbering adopted therein, it can be seen how the integrated dripper to which the anti-suction device is applied is configured from a one-piece body (1) with a planar or cylindrical configuration having an inlet of water to its inside formed by a prefilter (3) connecting with a pressure drop labyrinth (4) and leading it towards an outlet chamber (5) arranged in coincidence with an orifice (10) made for such purpose in the pipe (11).

Said anti-suction device has the particularity of incorporating a non-return sealing element (2) which as a result of its arrangement, has a slight upward-downward movement, being located at one end of the body (1), specifically, in its upper open face and exclusively in correspondence with at least one of the ends of the labyrinth (4), without physically sealing the actual body forming the labyrinth.

The sealing element (2) can be arranged in correspondence with an end of the labyrinth (4) at which the prefilter (3) forming the inlet of water is located, or in correspondence with the opposite end of the labyrinth (4) at which the outlet chamber (5) is located.

It must be indicated that the mentioned prefilter (3) consists of a plurality of orifices or boreholes (6) with reduced dimensions made in the end of the body (1) at the inlet of the fluid.

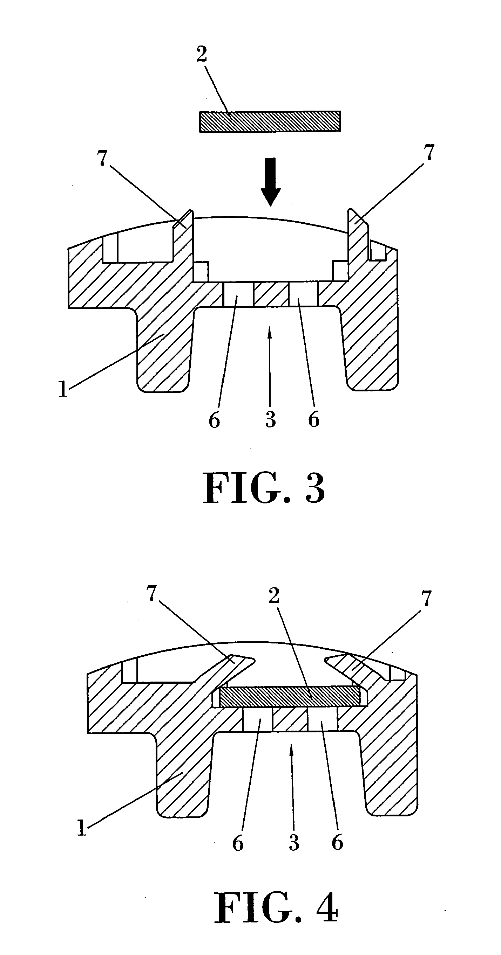

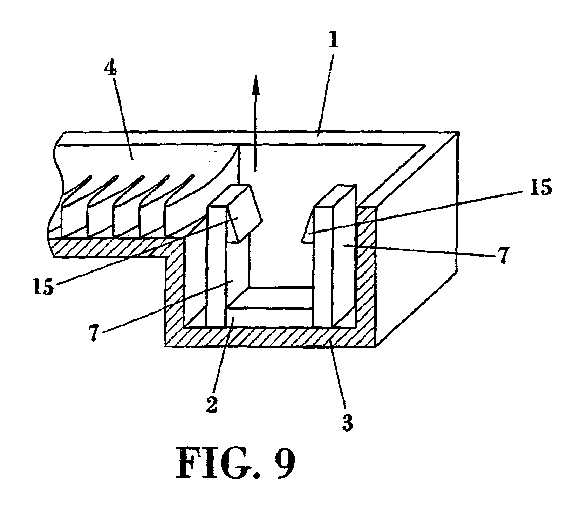

The described sealing element (2) is in turn housed in a cavity of the body (1) between respective retaining elements which can be formed in different ways, either as two partitions (7) having a certain inclination in opposite directions, as shown in Figure 4, two opposite perpendicular partitions (7) incorporating respective flanges (15) as shown in Figure 9, or two opposite flanges (15) arranged in the walls forming the upper cavities of the prefilter (3), not shown in this latter case, said retaining elements allowing both the seating of the sealing element (2) and its upward and downward movements caused by pressure variations which may occur inside the pipe (11), while at the same time preventing its disassembly in the event of being formed as a single element with a one-piece character.

In normal use conditions, the fluid will pass through the prefilter (3) and when the sealing element (2) is arranged in correspondence with the inlet end of the labyrinth (4) and outside the latter, it is pushed slightly upwards, until being retained by the retaining elements, preventing its exit.

When the sealing element (2) rises, the liquid will flow through the side spaces (8) provide between such element and the adjacent walls (9) to the retaining elements or, in the absence of partitions (7), between such element and the walls of the upper cavity to the prefilter (3), to pass through the labyrinth (4), finally reaching the outlet chamber (5) which is located in correspondence, as has been stated, with the orifice (10) made in the pipe (11).

When a pressure variation occurs, caused by a possible suction, the membrane of the sealing element (2) will tend to be positioned in its lower level in correspondence with the prefilter (3), closing the transmission and preventing the introduction of particles in the body (1).

Thus, the sealing element (2) is positioned at a lower level of the labyrinth (4), the prefilter (3) on which it is coupled being in a depression located adjacent thereto, said depression being formed by the partitions (7) and the adjacent walls (9) or the actual walls of the prefilter (3) when there are no partitions (7), such that when the sealing element (2) rises slightly due to the pressure of the liquid, the latter will flow through the small side spaces (8) passing through the labyrinth (4), and finally reaching the outlet chamber (5), and when a pressure variation occurs, caused by a possible suction, the sealing element (2) will tend to be positioned in its lower level, being adjusted to the upper surface of the depression defined by the prefilter (3).

It is possible for the sealing element (2) and the retaining elements to be located in a receptacle (12) and for the latter to incorporate lowering means (16) for the lowering on the cavity of the prefilter (3), being housed therein, its operation being identical to that mentioned above.

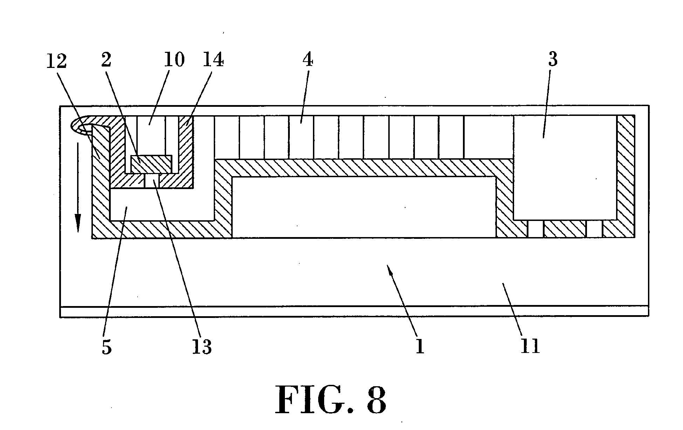

When the sealing element is arranged at the opposite end of the labyrinth (4), in correspondence with the outlet chamber (5), it will preferably be formed by means of the receptacle (12), as shown in Figure 8.

To that end, the depth of the chamber (5) will be the suitable one so that the latter is housed therein. Said receptacle (12) will have in its base an orifice (13) made for direct communication with the bottom of the outlet chamber (5), there being a conduit (14) for communication between the wall of the receptacle (12) and the wall of the chamber (5) allowing the liquid to flow therethrough and establish the communication with the labyrinth (4), operating in a manner similar to when the sealing element (2) is placed in the prefilter (3), i.e., upon rising, it will be retained at the upper part by the retaining elements and, when there is a pressure variation inside the pipes reversing the fluid circulation direction, the sealing element (2) will tend to be positioned in its lower level in correspondence with the lower face of the receptacle (12), closing the orifice (13) made in its base and closing the communication with the chamber (5) and consequently with the rest of the body of the dripper.

It is understood that any details of finish and shape that do not modify the essence of the invention can be variable in the present case.

## Claims

1. Anti-suction device applicable to integrated drippers, of the type formed from a body (1) with a planar or cylindrical configuration, having an inlet of fluid to its inside, formed by a prefilter (3) connecting with a pressure drop labyrinth (4), leading said fluid towards an outlet chamber (5) and arranged in accordance with an orifice (10) made for such purpose in the pipe (11) in which the dripper is internally installed, **characterized by** the fact that it consists of a non-return sealing element (2) having a slight upward-downward movement depending on the existing pressure or on the fluid direction, which is located in correspondence with at least one of the ends of the labyrinth (4) at which the prefilter (3) or the outlet chamber (5) is located, the body (1) of the dripper having respective retaining elements allowing the upward and downward movement of the sealing element (2) inside the body (1) of the dripper.

2. Anti-suction device applicable to integrated drippers according to claim 1, **characterized by** the fact that the sealing element (2) is housed between respective retaining elements consisting of opposite partitions (7) emerging from the upper face of the body (1), arranged in correspondence with the prefilter (3) or the outlet chamber (5), such that said sealing element (2) only covers the respective area of the prefilter (3) or outlet chamber (5).

3. Anti-suction device applicable to integrated drippers according to any of claims 1 and 2, **characterized by** the fact that the retaining elements have a certain converging inclination of their ends, closing on the sealing element (2) such that they allow both its seating and holding and its upward and downward movement.

4. Anti-suction device applicable to integrated drippers according to claim 1 and 2, **characterized by** the fact that the retaining elements consisting of partitions (7) have in their inner walls respective facing flanges (15) arranged at an upper level with respect to the bottom of the prefilter (3) or of the outlet chamber (5).

5. Anti-suction device applicable to integrated drippers according to claim 1, **characterized by** the fact that the sealing element (2) is housed between respective facing flanges (15) in at least two opposite walls forming the prefilter (3) or the outlet chamber (5) at one of the ends of the labyrinth (4).

6. Anti-suction device applicable to integrated drippers according to any of claims 2, 3, 4 and 5, **characterized by** the fact that the sealing element (2) is positioned at a lower level of the labyrinth (4), the prefilter (3) on which it is coupled being in a depression located adjacent thereto, said depression being formed by the partitions (7) and the adjacent walls (9) or the actual walls of the prefilter (3) in the absence of the partitions (7), such that when the sealing element (2) rises slightly due to the pressure of the liquid, the latter will flow through the small side spaces (8) passing through the labyrinth (4), and finally reaching the outlet chamber (5), and when a pressure variation occurs, caused by a possible suction, the sealing element (2) will tend to be positioned in its lower level, being adjusted to the upper surface of the depression defined by the prefilter (3).

7. Anti-suction device applicable to integrated drippers according to any of claims 1 and 6, **characterized by** the fact that the sealing element (2) and the retaining elements are located in a receptacle (12) housed in the cavity of the prefilter (3).

8. Anti-suction device applicable to integrated drippers according to any of claims 1, 2, 3, 4 and 5, **characterized by** the fact that the sealing element (2) and the retaining means are positioned in the outlet chamber (5) inside a receptacle (12); and in that in such case, the cavity of the outlet chamber (5) has a depth suitable for housing the receptacle (12) and the latter has a lower orifice (13) for communication with the bottom of the chamber (5), there being a conduit (14) for communication with the outlet of the labyrinth (4).

9. Anti-suction device applicable to integrated drippers according to claim 8, **characterized by** the fact that the receptacle (12) has lowering means (16) for the lowering on the cavity of the outlet chamber (5).

10. Anti-suction device applicable to integrated drippers according to claim 1, **characterized by** the fact that the prefilter (3) provided at one of the ends of the body (1) and defined in a depression between the partitions (7) and the adjacent walls (9) is formed as several orifices or boreholes (6) with reduced dimensions.

11. Anti-suction device applicable to integrated drippers according to claim 1, **characterized by** the fact that the sealing element (2) has an elastic nature, the body (1) of the dripper having a rigid nature.

12. Anti-suction device applicable to integrated drippers according to any of claims 1 and 11, **characterized by** the fact that the sealing element (2) consists of a silicone membrane or the like.

13. Anti-suction device applicable to integrated drippers according to claim 1, **characterized by** the fact that in the event that the body (1) of the dripper has an elastic nature, the sealing element (2) is rigid.
